# EUROPEAN PATENT APPLICATION

(11) **EP 2 813 946 A1**
(43) Date of publication of application: **17.12.2014**
(21) Application number: 13250066.1
(22) Date of filing: 15.06.2013
(51) Int. Cl.: G06F 9/44, G06F 9/54

(54) **Performing data operations at a central station from a remote station**

(71) Applicant: Fortnox AB, 351 06 Växjö (SE)
(72) Inventor: Bonnevier, Alexander, 352 33 Växjö (SE)
(74) Representative: Atkinson, Ralph

(57) **Abstract**

An instruction is generated at a remote station (**102**) for performing an operation at a central station (**101**). An input command is received via a graphical user interface (**201**, **202**) at the remote station (**102**). A graphical representation is changed (**204**) locally to show that the input command has been acted upon at the central station (**101**). The input command is conveyed asynchronously to the central station as a background process. The central station is prevented from acting upon the command resulting in the status of the remote station being incorrect. Input commands are stored locally at the remote station in a cache (**304**) prior to conveying the commands to the central station. A message is returned from the central station back to the remote station confirming that the central station has been prevented from acting upon the instruction. Details of the command are read from the local cache and the graphical user interface is reverted back to its initial condition to show that the input command has not been implemented by the central station.

## Description

### CROSS REFERENCE TO RELATED APPLICATIONS

This application represents the first application for a patent directed towards the invention and the subject matter.

### BACKGROUND OF THE INVENTION

### 1. Field of the Invention

The present invention relates to a method of instructing an operation to be preformed at a central station from a remote station, of the type comprising the steps of: receiving an input command via a graphical user interface at said remote station; changing a graphical representation locally to show that said input command has been acted upon at said central station; asynchronously conveying said input command to said central station as a background process; and attempting to act upon said input command at said central station.

The present invention also relates to a remote device configured to convey instructions to a central station, of the type comprising: an input device for receiving input commands in response to a displayed graphical user interface; a processing device; and a communication channel to a central station, wherein said processing device is configured to change a graphical representation locally to show that said input command has been acted upon by said central station and to asynchronously convey said input command to said central station as a background process for said central station to act upon.

The present invention also relates to a central station configured to receive instructions from a remote station, in which a received command is prevented from being acted upon.

### 2. Description of the Related Art

Many procedures are known for generating instructions at a local station which are then conveyed to a central station and acted upon at the central station. Systems of this type are widely deployed using technology generated to support the world wide web, for example, such as the use of asynchronous java script with XML or JSON. Collectively, this technology is sometimes referred to as AJAX.

Prior to the use of this asynchronous technology, similar platforms were implemented using synchronous technology. When using synchronous technology, a command may be generated at a remote station and conveyed to a central station. At the central station a question may be asked as to whether it is possible to act upon the command. Many additional inputs and status requirements may be present at the central station which may be considered to determine whether it is possible to act upon the command. For example, the command may break established rules and therefore could not be implemented under any circumstances. If such a situation arises, it could be possible to implement these rules at the remote station itself.

A further problem may arise if input commands have been received from elsewhere, such that the status of the central station has changed and is therefore unable to act upon the recently received command. The command is in itself valid and could have been acted upon at an earlier point in time. However, it has been superseded by a valid input command received by another channel.

Thirdly, it is possible that the operator of the remote station may lack the necessary authority in order to generate the command. At the central station, the authority of the user may be checked and a failure may occur.

In the synchronous solution, a displayed graphical user interface at the remote station will effectively be placed on hold until the necessary checks and modifications have been made at the central station. Having completed this process at the central station, the central station would then have been responsible for generating a new graphical user interface reflecting the changes that have been made. Thus, under this previous synchronous solution, the displayed information at the remote station is never out of step with that held at the central station. Consequently, it is possible for sensitive and time critical data to be manipulated in this way without risk of discrepancy occurring between what is shown to the user at the remote station and what is held centrally at the central station.

A problem with this approach does however exist in that there is a noticeable delay experienced by the user as the refresh operation takes place. Thus, this may be acceptable in some environments but in many environments it will create a negative drag on overall work flow.

In the asynchronous environment, a user at a remote station is presented with feedback to the effect that the instruction has been acted upon immediately. There is no delay and the user is not left waiting for further information to be returned back from the central station. As such, the user can continue making further instructions, which may involve a local operation to be preformed or may require further instructions to be conveyed to the central station. Again, the user experiences an environment in which the command has been acted upon immediately.

However, the commands are conveyed to the central station asynchronously as a background process. Eventually, all of the commands will have been conveyed to the central station and if all is well, the data held at the central station and the actions performed by the central station will be consistent with those shown at the remote station. However, if any of the commands are rejected at the central station, a discrepancy will exist. In particularly, the user at the remote station will be presented with an interface showing that an action has taken place but in actual fact the action has not taken place at the central station. In many applications, this situation could create serious problems, therefore rendering the application unacceptable. Such an approach would not be acceptable in time critical or data critical applications. These could, for example, include machine control applications, military applications or financial applications etc.

### BRIEF SUMMARY OF THE INVENTION

According to an aspect of the present invention, there is provided a method of instructing an operation to be performed at a central station from a remote station of the aforesaid said type, characterized by: caching an input command in a local cache at the remote station prior to conveying said command to the central station; returning a message from said central station back to said remote station confirming that the central station has been prevented from acting upon said input command; reading details of the command from local cache; and reverting the graphical user interface to show a condition consistent with the condition of the graphical user interface prior to the command being received.

In an embodiment, the input command is removed from the cache after reverting the graphical user interface.

According to a second aspect to the present invention, there is provided a remote device configured to convey instructions to a central station of the afore said type, **characterized in that**; a local cache at the remote station caches the input command; a message is received from the central station stating that the central station has been prevented from acting upon said input command; details of the input command are read from said local cache; and said graphical user interface reverts to show a condition consistence with the condition on the graphical user interface prior to the command being received.

In an embodiment, the graphical user interface displays a data element of interest in a first region and an input command results in said data element being transferred to a second region.

According to a third aspect of the present invention, there is provided a central station configured to receive instructions from a remote station, in which a received command is prevented from being acted upon, characterized by; returning a message back to said remote station confirming that said received command has not been acted upon; and ensuring that the graphical representation of the status of the central station is maintained consistently at the remote station, in which, at the remote station: the received command generated via a graphical user interface has been stored locally in a local cache; details of said stored command are read from said local cache in response to receiving said returned message; and said graphical user interface is reverted to show a condition consistent with the condition of the graphical user interface prior to the command being received.

### BRIEF DESCRIPTION OF THE DRAWINGS

Figure 1 shows an environment for instructing an operation;
Figure 2 details a remote device of the type shown in Figure 1;
Figure 3 details the apparatus shown in figure 2;
Figure 4 identifies operations performed by a processor;
Figure 5 shows a first example of processing procedures identified in Figure 4;
Figure 6 shows a second example of processing procedures identified in Figure 4;
Figure 7 shows operations performed at a central station; and
Figure 8 show the graphical user interface of Figure 2.

### DETAILED DESCRIPTION OF EXAMPLE EMBODIMENTS

### Figure 1

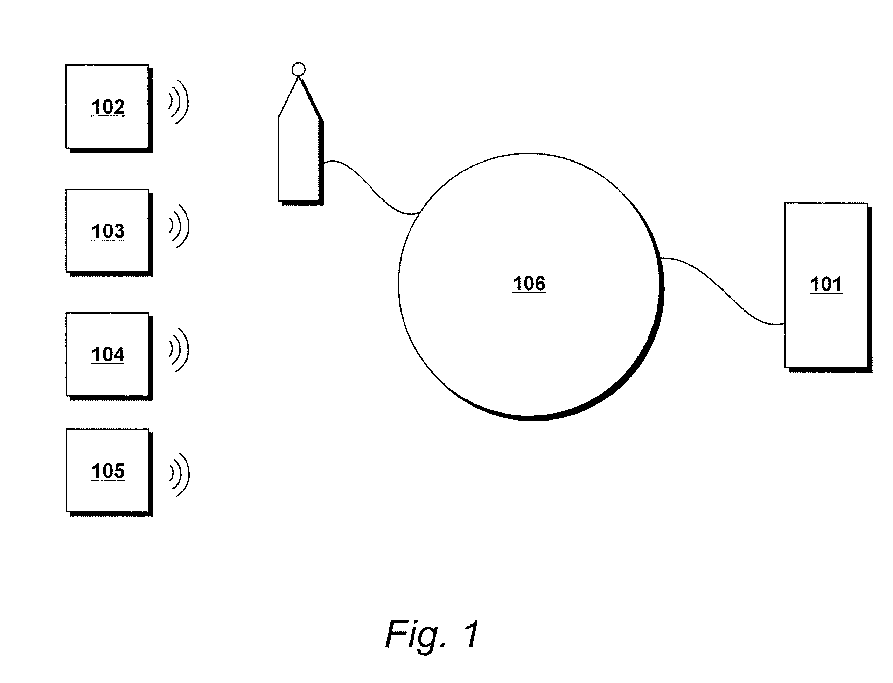

An environment for instructing an operation to be formed at a central station 101 from a remote station 102 is shown in Figure 1. A second remote station 103, a third remote station 104 and a forth remote station 105 are also shown. Remote stations 102 to 105 communicate with central station 101 via network connections 106. The network 106 may be local, operational over a site or operational internationally. In an embodiment, communication to the remote devices 102 to 105 is achieved wirelessly.

In an embodiment, the remote stations display graphical user interfaces but pages displayed to the user are not generated each time by the server 101 and conveyed to the appropriate remote station. In an embodiment, non-static data is conveyed using a relatively small data structure which may be implemented using java script object notation (JSON).

In an embodiment, static parts of displayed graphical pages may be conveyed during an initial login procedure. Thus, static parts of the interface may be sent in a single download thereby establishing a relationship between a remote device 102 and the central station 101.

In an embodiment, the central station 101 may support a plurality of data sets representing independent client relationships. For the purposes of this example, it may be assumed that remote device 102 and remote device 103 are available to a particular user-group and relate to a specific client account. Thus, devices 102 and 103 communicate with a specific data set within the server 101. Again, for the purposes of this example, it may be assumed that remote device 104 has its own data set and device 105 has a further data set. In an embodiment, these data sets are completely independent and relate to a specific functionality available to a particular user group. Estimates suggest that the amount of data conveyed for an application may be reduced by an order of magnitude say, from 100 Kbytes to 10 Kbytes.

Compared to known systems, a greater reliance is placed on the processing capabilities available at the remote devices themselves. Again, this reduces the burden placed upon the central station 101. The processing requirements of the server could therefore be significantly reduced, possibly by one hundred fold.

The configuration of Figure 1 allows the actual performance of the system to be improved. However, in addition to this, there is also a perceived performance and this perceived performance, as perceived by the actual user, can be enhanced further. Such an environment significantly enhances work-flow thereby allowing systems of this type to be deployed within professional environments, in which interactions may occur continually.

### Figure 2

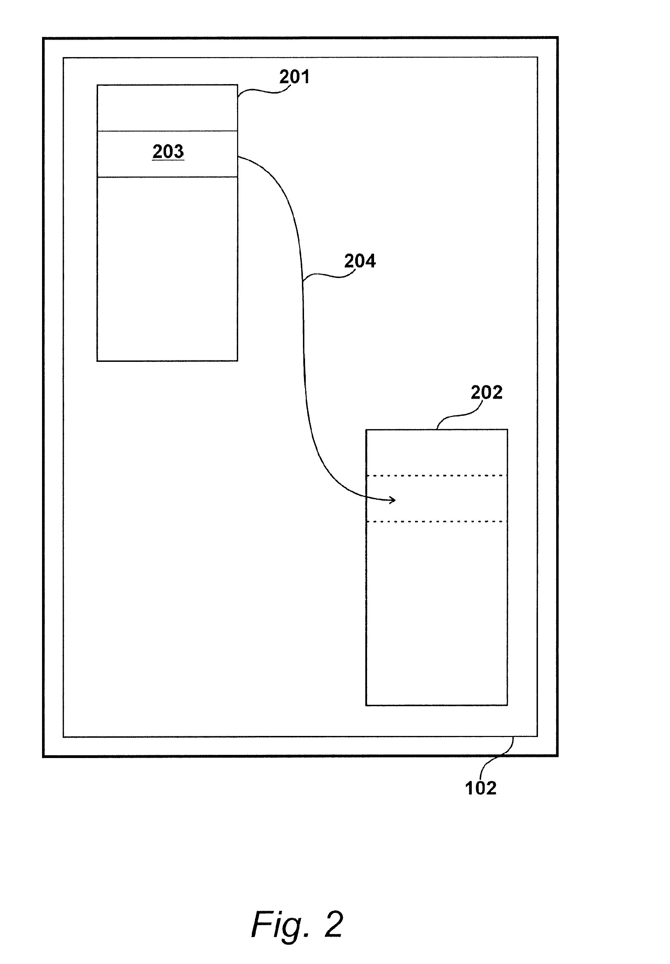

Remote device 102 is shown in Figure 2, displaying a typical graphical user interface. The graphical user interface includes a first region or table 201 and a second region 202. Within region 201 there is a data element 203. In response to a user input command, the data element 203 may be moved from table 201 to table 202, as illustrated by arrow 204.

The operation illustrated in Figure 2 represents the generation of a command to the effect that data element 203 is to be transferred from table 201 to table 202. In an embodiment, the presence of data element 203 within region 201 specifies a particular condition, to the effect that an operation or function is to be performed upon data element 203. Similarly, the presence of data element 203 within region 202 also represents a situation to the effect that an operation is to be performed but the nature of that operation will be different. Thus, the command transferring the location of the data element within the graphical user interface effectively represents a change of condition or a change of state, to the effect that a second function or operation is to be performed as an alternative to a first function or operation being performed upon data element 203.

In an example, this may mean that a particular operation within a factory is to be performed upon an element instead of a different operation being performed. For example, a motor vehicle under construction may be scheduled to be painted in a particular colour (defined by region 201) and a decision has been made to effect a change of colour, represented by the element being within the region 202. Thus, in response to a costumer specifying that they now require the car in green and not in red, say, a remote operation using the graphical user interface may be performed which in turn instructs the operations necessary to achieve this via a database held at the central station and then onto the actual factory floor itself.

The graphical operation has occurred in real-time and the user can move on to the next task. When reviewed by the user locally it is clear that the data element is now in region 202 and the car will be painted green. However, for the sake of this example, it is assumed that the green option in no-longer available. The car will not be painted green and this lack of availability is known to the central station. Thus, at the central station the instruction will be rejected and the database will not be updated. The car will go through the production system but it will be painted red. However, the central station is not responsible for generating a refreshed graphical user interface showing that the instruction has been rejected due to the fact that the green option is no longer available.

### Figure 3

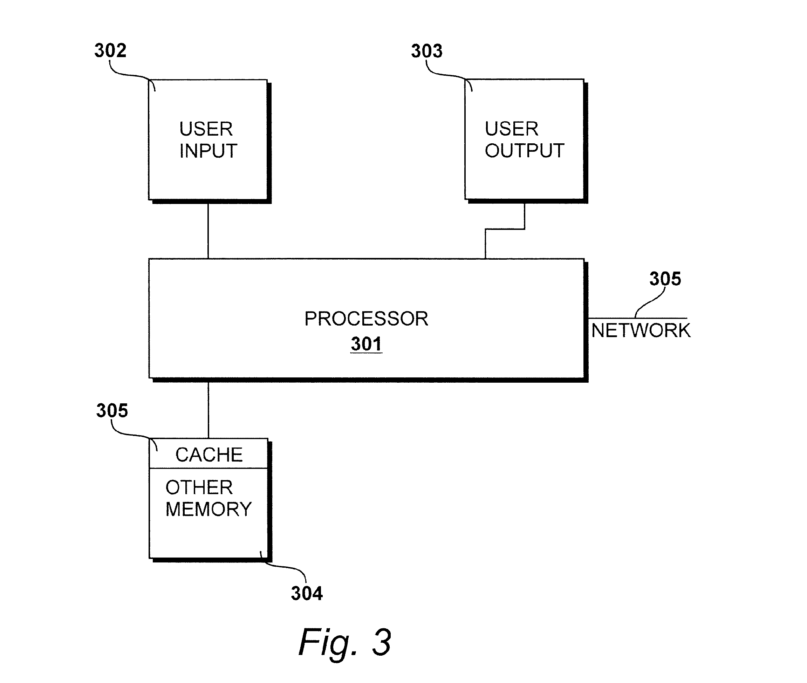

The apparatus of the remote station 102 is detailed in Figure 3. The remote station includes a processor 301 configured to receive input commands from a user input device 302 and to display an output interface via a user output device 303. The processor 301 sends data to and receives data from a memory device 304. Within the memory device 304 a local cache 305 is designated.

The presence of the local cache 303 enables the remote device to retain a record or history of locally generated input commands that have been received locally and acted upon locally, prior to being conveyed (asynchronously) to the central station.

### Figure 4

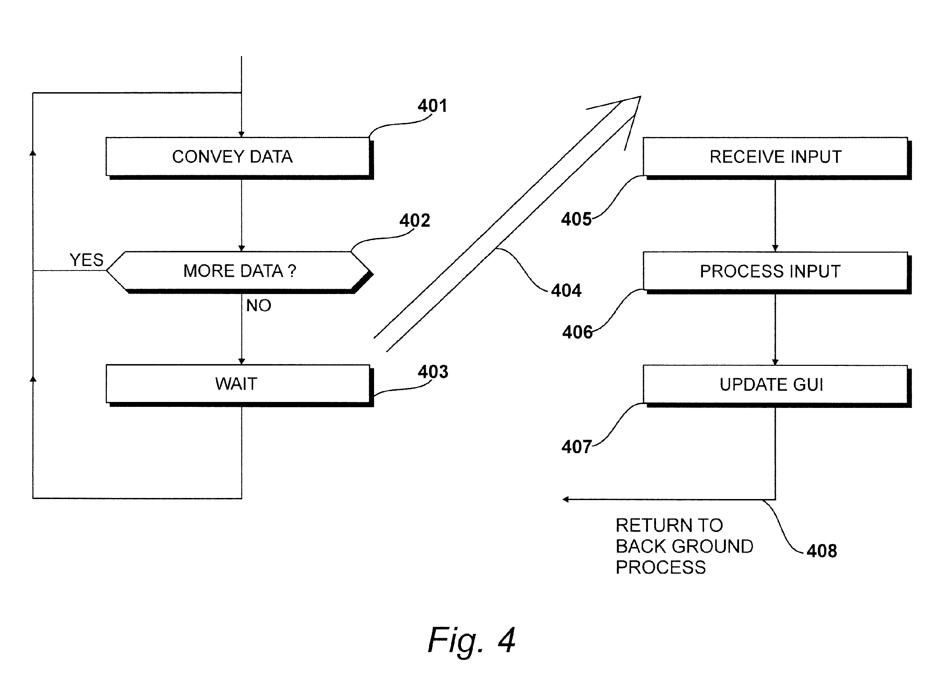

Operations performed by processor 301 are illustrated in Figure 4. Foreground processes are shown to the right and the background asynchronous processes are shown to the left. When not required to perform operations in response to local input, the processor 401 attempts to convey data, as shown at step 401, to the central station 101 via its local network connection 305 to the network 106. As previously stated, this may be a wireless connection.

After conveying data at step 401, a.question is asked at step 402 as to whether more data is available and when answered in the affirmative this further data is again conveyed at step 401.

If the question asked at 402 is answered in the negative, the procedure may enter a wait state at step 403 and then again loop round to step 401 to continue conveying any additionally received data to the central station 101.

At anytime during the operations being performed from step 401 through step 403, the processor 301 may receive an interrupt, as illustrated by arrow 404. The processor 301 immediately enters a routine to service the interrupt, possibly involving the stacking of data, whereupon it is then in a position to receive input data at step 405. At step 406 the input data is processed and at step 407 the graphical user interface displayed to the user, via user input interface 301, is updated.

After the completion of the interrupt being serviced, the processer returns to attending to the background processes, as illustrated by arrow 408.

### Figure 5

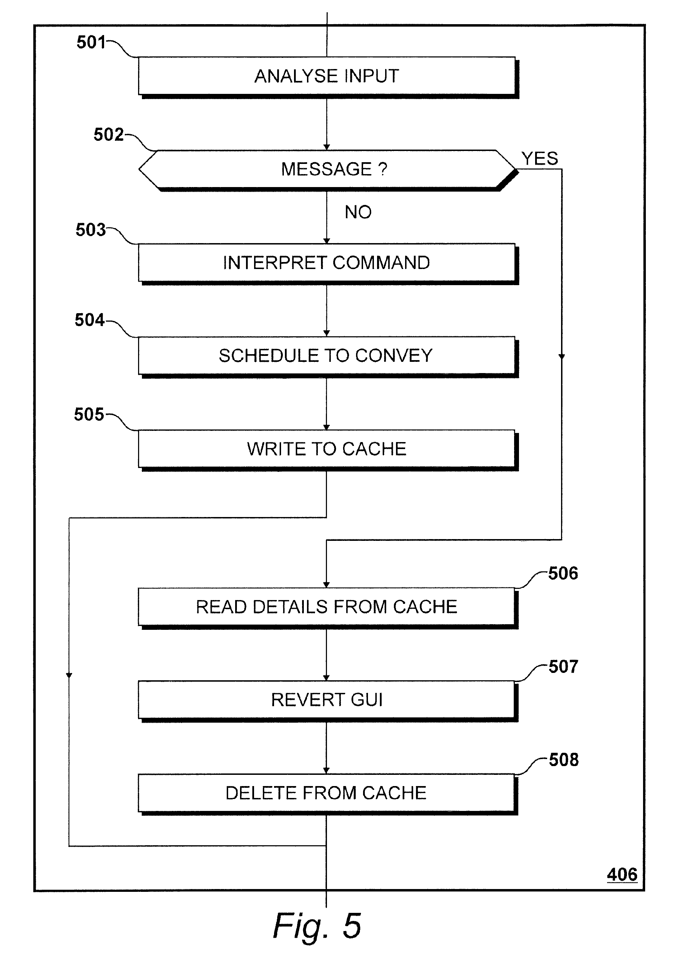

A first example of processing procedures 406 are shown in Figure 5. At step 501 the nature of the input received at step 405 is analysed and at step 502 a question is asked as the whether the input data is a message from the central station. In this example, it is assumed that if a message has been received from the central station, the message is a notification to the effect that a previously conveyed instruction from the remote device has been rejected by the central station.

If the question asked at step 502 is answered in the negative, the input data will have been identified as a locally generated input representing a command to be implemented locally. Thus, at step 503 the command is interpreted and executed locally. Thus, for example, the command may represent a transfer of a data item as previously descried with reference Figure 2.

The operations performed a step 503 will have resulted in local modifications being made to the user interface. However, at this stage, the change will not have been implemented at the central station. It is therefore necessary to convey this command asynchronously to the central station. Thus, at step 504, an entry is made in a schedule to the effect that the command is to be conveyed to the central station. However, as previously stated, a problem exists if the command is subsequently rejected at the central station. To overcome this problem, details of the command are also written to the local cache at step 505. Further updates to the GUI are then completed at step 407 as previously described.

If the question asked step 502 is answered in the affirmative, to the effect that the analysed input did represent a message from the central station, details of the original instruction are read from the cache at step 506. At step 507 the operation previously implemented via the graphical interface is reverted, so as to place the status of the interface into a condition consistence with that as it was before the instruction was implemented. Furthermore, in an embodiment, the actual graphical movement is replayed backwards, in the form of an animation, to convey information to the user to the effect that the instruction was rejected. Thus, the status of the remote station is brought into conformity with that of the central station and the user is notified of this change due to the graphical representation being animated.

After performing this exercise once, it would not be done again therefore at step 508 details of the instruction are deleted from the cache.

It can be appreciated that over time many instructions will be retained in the cache and eventually the cache may overflow. Most of the instructions written to cache will not be rejected and therefore they will not be deleted at step 508. To overcome this problem, it may be possible to include a time-out function; such that instructions only remain in cache for a specified period, whereafter they are effectively flushed so as to maintain space available for newly generated instructions.

For different applications, this flushing period may differ, therefore an implementation should ensure that there is consistency between the anticipated generation rate, the flushing period and the size of the cache.

### Figure 6

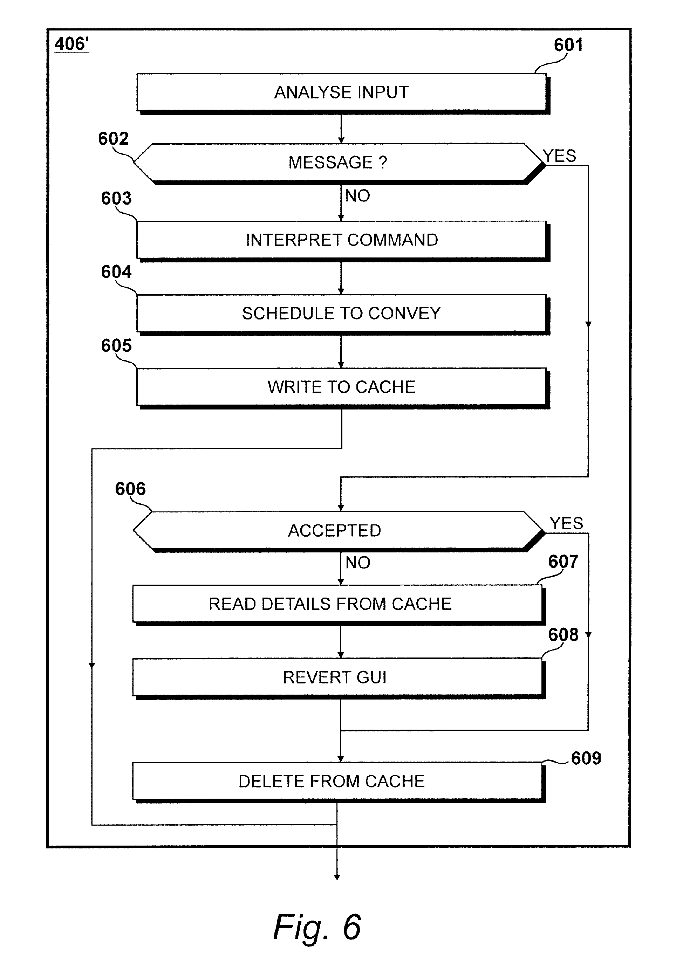

An alternative to process 406 (identified as process 406') is shown in Figure 6. Again, at step 601 the nature of the input received at 405 is analysed and at step 602 a question is asked as to whether the input data is a message from the central station. In this example, a message received from the central station may be a notification to the effect that the previously conveyed instruction from the remote device has been rejected. However it may also confirm that a previously conveyed instruction from the remote device has been accepted. Upon identifying these accepted messages, no further action is required at the remote station but this does provide an opportunity for the entry to be removed from cache, therefore the requirement for cache flushing is avoided.

As before, if the question asked a step 502 is answered in the negative, the command is implemented locally by being interpreted at step 603, scheduled at step 604 and written to cache at step 605.

If the question asked at step 602 is answered in the affirmative, to the effect that the analysed input did represent a message from the central station, a question is asked at step 606 at to whether the message represents an acceptance message. When answered in the affirmative, no further action is required and the identified entry is deleted from cache at step 609.

If the question asked at step 606 is answered in the negative, to the effect that the message was not an acceptance message and therefore represents a rejection message, similar procedures are performed as before such that details of the message are read from cache at step 607 and the graphical user interface reverts at step 608. The message is then deleted from cache at step 609.

### Figure 7

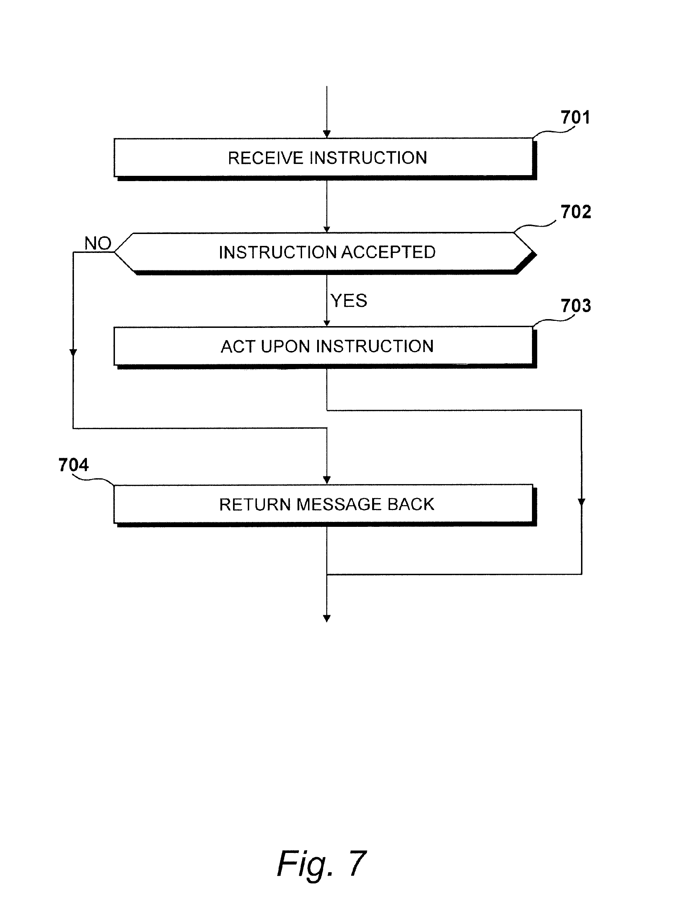

Operations performed at central station 101 are identified in Figure 7. At step 701 an instruction is received from a remote device and a question is asked at step 702 as to whether the instruction may be accepted. When the question asked at step 702 is answered in the affirmative, the instruction is acted upon at step 703. Thus, under this situation, the remote device has generated an instruction and the local graphical user interface represents a condition to the effect that the instruction has been acted upon. This instruction has then been conveyed, asynchronously, to the central station, whereupon the instruction was accepted and acted upon. Thus, under this situation, the status of the central station is consistent with the condition displayed at the local graphical user interface.

If the question asked at step 702 is answered in the negative, to the effect that the instruction cannot be accepted, the instruction is not acted upon at step 703. A situation has now arisen to the effect that the status of the instruction at the central station is different from that as displayed at the remote device. It is not possible to act upon the instruction but the local device suggests that the instruction has been acted upon. In accordance with the inventive principles described herein, the graphical user interface reverts, so as to bring its status back into line with the status of the data held at the central station. To achieve this, a message is returned back at step 704 to the effect that the instruction has been rejected.

### Figure 8

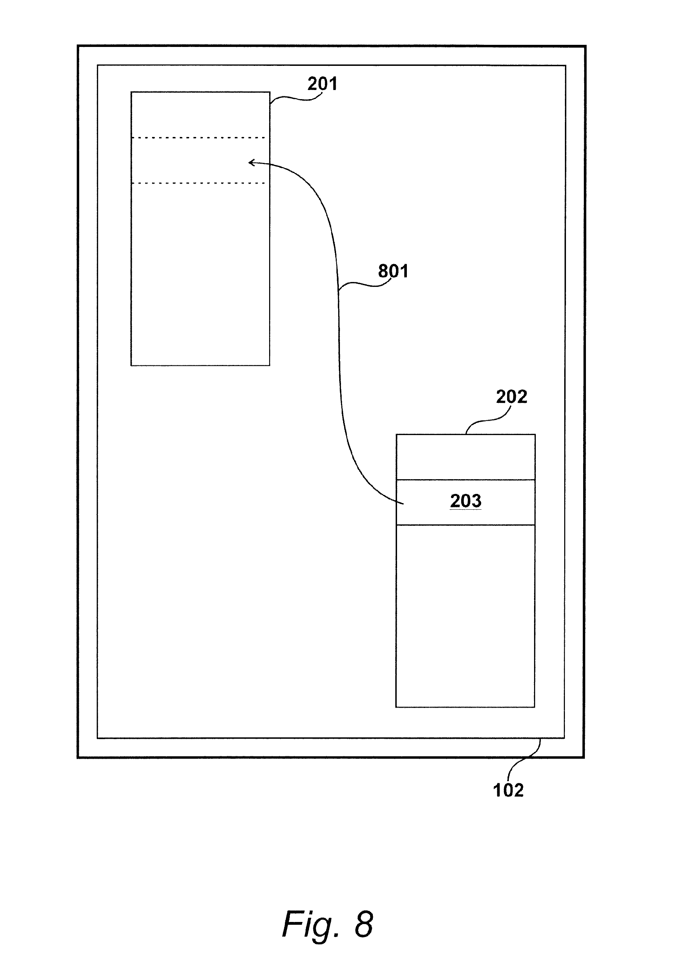

The graphical user interface of Figure 2 is shown again in Figure 8. For the purposes of illustration, it is assumed that the message generated at step 704 has been identified at step 502, resulting in details being read from cache at step 506. Thereafter, at step 507, the process reverts the graphical user interface. Thus, the previous instruction had moved data element 203 from region 201 to region 202, as illustrated by arrow 204. In an embodiment, process 507 now performs the reserve operation of moving data element 203 from region 202 back to region 201 as illustrated in arrow 801. In an embodiment, this may occur substantially instantly as soon as procedure 507 is implemented. However, in an alternative embodiment, the procedure is animated such that a user will visually see the data element 203 transferring back to region 201, as if being acted upon by a ghostly operator. In this way, the user is notified to the effect that the transfer has taken place and will therefore be aware that the previously generated instruction has been rejected by the central station and that the status of the data held at the central station is now consistent with that shown at the remote device.

Following the example previously described, the selection of painting the car green has been rejected such that, unless further measures are taken, the car will be painted red. The user needs to be aware of this condition because it may be less that satisfactory with the prospective consumer. Thus, the operator may attempt to make a similar modification again, possibly instructing the process to paint the car blue.

It should be appreciated that the invention may be deployed in many different environments. The example above describes the application of the invention in relation to a manufacturing process and it should be appreciated that it could be adapted to provide instructions and commands in many different manufacturing applications. It should also be appreciated that the invention may be deployed in other types of environments for controlling other operations, such as the control of financial operations within a banking environment or within an accounting environment.

## Claims

1. A method of instructing an operation to be performed at a central station from a remote station, comprising the steps of:
receiving an input command via a graphical user interface at said remote station;
changing a graphical representation locally to show that said input command has been acted upon at said central station;
asynchronously conveying said input command to said central station as a background process;
attempting to act upon said input command at said central station, and
preventing said central station from acting upon said command, **characterised by**:
caching an input command in a local cache at the remote station prior to conveying said command to the central station;
returning a message from said central station back to said remote station confirming that the central station has been prevented from acting upon said input command;
reading details of the command from said local cache; and
reverting the graphical user interface to show a condition consistent with the condition of the graphical user interface prior to the command being received.

2. The method of claim 1, wherein the input command is removed from said local cache after reverting the graphical user interface.

3. The method of claim 1, wherein the input command is removed from said local cache after a predetermined time-out period.

4. The method of claim 1, wherein a message is returned when the central station does act upon an instruction, said reverting step is not performed and the instruction is removed from said local cache.

5. The method of claim 1, wherein said graphical user interface displays a data element of interest in a first region and an input command results in said data element being transferred to a second region.

6. The method of claim 5, wherein the presence of a data element in said first region represents a first function to be performed upon said data element and the presence of a data element in said second region represents a second function to be performed upon said data element.

7. An apparatus configured to convey instructions to a central station, comprising:
an input device for receiving input commands in response to a displayed graphical user interface;
a processing device; and
a communication channel to a central station, wherein said processing device is configured to change a graphical representation locally to show that said input command has been acted upon by said central station and to asynchronously convey said input command to said central station as a background process for said central station to act upon, **characterised in that**:
a local cache at the remote station caches the input command;
a message is received from the central station stating that the central station has been prevented from acting upon said input command;
details of the input command are read from said local cache; and
said graphical user interface reverts to show a condition consistent with the condition of the graphical user interface prior to the command being received.

8. The apparatus of claim 7, wherein said processing device is configured to remove said input command from said cache after reverting the graphical user interface.

9. The apparatus of claim 7, wherein said processing device is configured to monitor a time-out period and to remove the input command from said cache after said time-out period.

10. The apparatus of claim 7, wherein said processing device is configured to identify acceptance messages and to remove an input command from cache in response to receiving an acceptance message.

11. The apparatus of claim 7, wherein said processing device is configured to:
show a first region and a second region in said graphical user interface;
and
transfer a data element from said first region to said second region in response to said input command.

12. Apparatus at a central station configured to receive instructions from a remote station, in which a received command is prevented from being acted upon, **characterised by**:
returning a message back to said remote station confirming that said received command has not been acted upon; and
ensuring that a graphical representation of the status of the central station is maintained consistently at the remote station, in which, at the remote station:
the received command generated via a graphical user interface has been stored locally in a local cache;
details of said stored command are read from said local cache in response to receiving said returned message; and
said graphical user interface is reverted to show a condition consistent with the condition of the graphical user interface prior to the command being received.

13. The apparatus of claim 12, also configured to return a message back to the remote station confirming that the instruction has been accepted.

14. The apparatus of claim 12, wherein a first function is performed by the apparatus with respect to a data element being placed in a first region of a graphical interface and a second function is performed in response to said data element being placed in a second region.

15. The apparatus of claim 14, wherein:
the performance of said first function generates a first command for controlling a physical process; and
the performance of said second function generates a second command for controlling said physical process.
